# EUROPEAN PATENT APPLICATION

(11) **EP 4 550 872 A1**
(43) Date of publication of application: **07.05.2025**
(21) Application number: 22948319.3
(22) Date of filing: 28.06.2022
(51) Int. Cl.: H04W 24/10

(54) **CHANNEL MEASUREMENT METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/102069
(87) International publication number: WO 2024/000199

(57) **Abstract**

Disclosed in embodiments of the present application are a channel measurement method and an apparatus, which can be applied to a communication system. The method comprises: performing channel measurement on a candidate relay device to obtain a first channel measurement result of the candidate relay device; and when the first channel measurement result satisfies a set event, reporting the first measurement result and/or performing link switching. In embodiments of the present application, channel measurement can be performed on the candidate relay device, and triggering determination of reporting or switching is performed by means of the set event; a relay device which is more suitable for providing a relay service can be determined by means of the channel measurement, and switching between the relay devices can be achieved by means of reporting or active link switching, that is, switching between indirect links can be achieved, switching from a direct link to the indirect link comprising the relay device can also be achieved, and a mode of switching links for a device is enhanced.

## Description

### FIELD

The present application relates to the field of communication technologies, and more particularly to a method and a device for channel measurement.

### BACKGROUND

A direct connection between a terminal device and a base station is called a direct link, and a connection between the terminal device and the base station through a relay terminal device is called an indirect link. Existing terminal devices can only support link switching between the direct link and the indirect link.

### SUMMARY

Embodiments of the present application provide a method and a device for channel measurement, which can be applied to a communication system, can perform a channel measurement to a candidate relay device, and realize that the terminal device can support switching between a plurality of types of links based on a set event of measurement reporting.

In a first aspect, embodiments of the present application provide a method for channel measurement, including:
performing a channel measurement on a candidate relay device, to obtain a first channel measurement result of the candidate relay device; and
the first channel measurement result satisfying a set event, reporting the first measurement result to a second device; and/or
performing link switching.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device. In a second aspect, embodiments of the present application provide another method for channel measurement, including:
in a case where a first measurement result of a candidate relay device satisfies a set event, receiving the first measurement result reported by a first device and/or performing link switching between the network device and the first device.

In a third aspect, embodiments of the present application provide another method for channel measurement, including:
in a case where a first measurement result of a candidate relay device satisfies a set event, receiving the first measurement result reported by a first device and/or performing link switching between a peer device and the first device.

In a fourth aspect, embodiments of the present application provide a communication device. The communication device has some or all of functions of the first device for realizing the method described in the first aspect. For example, the functions of the communication device may have some or all of the functions in embodiments of the present application or may have the function of independently implementing any of embodiments in the present application. The described function can be realized by hardware or by hardware executing corresponding software. The hardware or software includes one or more units or modules corresponding to the above functions.

In an implementation, a structure of the communication device may include a transceiver module and a processing module, and the processing module is configured to support the communication device to perform the corresponding functions in the method. The transceiver module is configured to support communication between the communication device and other devices. The communication device may also include a storage module, and the storage module is configured to couple with the transceiver module and the processing module, and it saves the necessary computer programs and data of the communication device.

As an example, the processing module can be a processor, the transceiver module can be a transceiver or communication interface, and the storage module can be a memory.

In a fifth aspect, embodiments of the present application provide another communication device. The communication device has some or all of functions of the network device for realizing the method described in the second aspect. For example, the functions of the communication device may have some or all of the functions in embodiments of the present application or may have the function of independently implementing any of embodiments in the present application. The described function can be realized by hardware or by hardware executing corresponding software. The hardware or software includes one or more units or modules corresponding to the above functions.

In an implementation, the structure of the communication device can include a transceiver module and a processing module, and the processing module is configured to support the communication device to perform the corresponding functions in the method. The transceiver module is configured to support communication between the communication device and the other devices. The communication device may also include a storage module, and the storage module is configured to couple with the transceiver module and the processing module, and it saves the necessary computer programs and data of the communication device.

In a sixth aspect, embodiments of the present application provide another communication device. The communication device has some or all of functions of the peer device for realizing the method described in the second aspect. For example, the functions of the communication device may have some or all of the functions in embodiments of the present application or may have the function of independently implementing any of embodiments in the present application. The described function can be realized by hardware or by hardware executing corresponding software. The hardware or software includes one or more units or modules corresponding to the above functions.

In an implementation, the structure of the communication device can include a transceiver module and a processing module, and the processing module is configured to support the communication device to perform the corresponding functions in the method. The transceiver module is configured to support communication between the communication device and the other devices. The communication device may also include a storage module, and the storage module is configured to couple with the transceiver module and the processing module, and it saves the necessary computer programs and data of the communication device.

In a seventh aspect, embodiments of the present application provide a communication device. The communication device includes a processor, and when the processor invokes a computer program in a memory, the method as described in the first aspect is performed.

In an eighth aspect, embodiments of the present application provide a communication device. The communication device includes a processor, and when the processor invokes a computer program in a memory, the method as described in the second aspect is performed.

In a ninth aspect, embodiments of the present application provide a communication device. The communication device includes a processor, and when the processor invokes a computer program in a memory, the method as described in the third aspect is performed.

In a tenth aspect, embodiments of the present application provide a communication device. The communication device includes a processor and a memory, a computer program is stored in the memory, and the processor executes the computer program stored in the memory, to cause the communication device to perform the method as described in the first aspect.

In an eleventh aspect, embodiments of the present application provide a communication device. The communication device includes a processor and a memory, a computer program is stored in the memory, and the processor executes the computer program stored in the memory, to cause the communication device to perform the method as described in the second aspect.

In a twelfth aspect, embodiments of the present application provide a communication device. The communication device includes a processor and a memory, a computer program is stored in the memory, and the processor executes the computer program stored in the memory, to cause the communication device to perform the method as described in the third aspect.

In a thirteen aspect, embodiments of the present application provide a communication device. The device includes a processor and an interface circuit, the interface circuit is configured to receive code instructions and transmit them to the processor, and the processor is configured to run the code instructions, to cause the device to perform the method as described in the first aspect.

In a fourteen aspect, embodiments of the present application provide a communication device. The device includes a processor and an interface circuit, the interface circuit is configured to receive code instructions and transmit them to the processor, and the processor is configured to run the code instructions, to cause the device to perform the method as described in the second aspect.

In a fifteen aspect, embodiments of the present application provide a communication device. The device includes a processor and an interface circuit, the interface circuit is configured to receive code instructions and transmit them to the processor, and the processor is configured to run the code instructions, to cause the device to perform the method as described in the third aspect.

In a sixteen aspect, embodiments of the present disclosure provide a computer-readable storage medium, configured to store instructions for the first device, and when the instructions are executed, the first device is caused to perform the method as described in the first aspect.

In a seventeen aspect, embodiments of the present disclosure provide a readable storage medium, configured to store instructions for the network device, and when the instructions are executed, the network device is caused to perform the method as described in the second aspect.

In an eighteen aspect, embodiments of the present disclosure provide a readable storage medium, configured to store instructions for the peer device, and when the instructions are executed, the peer device is caused to perform the method as described in the third aspect.

In a nineteen aspect, the present application further provides a computer program product including a computer program, and when it is executed on a computer, the computer is caused to perform the method as described in the first aspect.

In a twentieth aspect, the present application further provides a computer program product including a computer program, and when it is executed on a computer, the computer is caused to perform the method as described in the second aspect.

In a twenty-first aspect, the present application further provides a computer program product including a computer program, and when it is executed on a computer, the computer is caused to perform the method as described in the third aspect.

In a twenty-second aspect, the present application provides a computer program, and when it is executed on a computer, the computer is caused to perform the method as described in the first aspect.

In a twenty-third aspect, the present application provides a computer program, and when it is executed on a computer, the computer is caused to perform the method as described in the second aspect.

In a twenty-fourth aspect, the present application provides a computer program, and when it is executed on a computer, the computer is caused to perform the method as described in the third aspect.

### BRIEF DESCRIPTION OF THE DRAWINGS

In order to more clearly illustrate the technical solutions in embodiments of the present application or the background art, the drawings required to be used in embodiments or background art of the present application are described below.
FIG. 1 is a schematic diagram of architecture of a communication system provided by an embodiment of the present application;
FIG. 2 is a flow chart of a method for channel measurement provided by an embodiment of the present application;
FIG. 3 is a flow chart of another method for channel measurement provided by an embodiment of the present application;
FIG. 4 is a flow chart of another method for channel measurement provided by an embodiment of the present application;
FIG. 5 is a flow chart of another method for channel measurement provided by an embodiment of the present application;
FIG. 6 is a flow chart of another method for channel measurement provided by an embodiment of the present application;
FIG. 7 is a flow chart of another method for channel measurement provided by an embodiment of the present application;
FIG. 8 is a flow chart of another method for channel measurement provided by an embodiment of the present application;
FIG. 9 is a flow chart of another method for channel measurement provided by an embodiment of the present application;
FIG. 10 is a flow chart of another method for channel measurement provided by an embodiment of the present application;
FIG. 11 is a flow chart of another method for channel measurement provided by an embodiment of the present application;
FIG. 12 is a flow chart of another method for channel measurement provided by an embodiment of the present application;
FIG. 13 is a flow chart of another method for channel measurement provided by an embodiment of the present application;
FIG. 14 is a flow chart of another method for channel measurement provided by an embodiment of the present application;
FIG. 15 is a flow chart of another method for channel measurement provided by an embodiment of the present application;
FIG. 16 is a flow chart of another method for channel measurement provided by an embodiment of the present application;
FIG. 17 is a structural schematic diagram of a communication device provided by an embodiment of the present application;
FIG. 18 is a structural schematic diagram of another communication device provided by an embodiment of the present application; and
FIG. 19 is a structural schematic diagram of a chip provided by an embodiment of the present application.

### DETAILED DESCRIPTION OF THE DISCLOSURE

Exemplary embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the exemplary embodiments do not represent all implementations consistent with the present disclosure. On the contrary, they are merely examples of a device and a method consistent with some aspects of the present disclosure, as elaborated in the appended claims.

The terms used in embodiments of the present disclosure are only for purpose of description of particular embodiments, and are not intended to limit embodiments of the present disclosure. The singular form "a" and "the" used in embodiments of the present disclosure and the appended claims is also intended to include the plural form, unless other meanings are explicitly expressed in the context. It should be understood that, the term "and/or" used herein refers to include any or all of the possible combinations of one or a plurality of listed related items.

It should be understood that, although the terms "first", "second", "third" may be employed by embodiments of the present disclosure to describe various information, these information should not limited by these terms. These terms are only used to distinguish the information of the same type from each other. For example, first information may be referred to as second information without departing from the scope of embodiments of the present disclosure, and similarly, the second information may also be referred to as the first information. Depending on the context, the word "if" as used here can be interpreted as "when......" or "upon......" or "in response to determining..." For the sake of brevity and ease of understanding, the term used herein to characterize the size relationship is "greater than" or "less than", "higher than" or "lower than". However, for those skilled in the art, it can be understood that the term "greater than" also covers the meaning of "greater than or equal to", and "less than" also covers the meaning of "less than or equal to"; the term "higher than" covers the meaning of "higher than or equal to", and "lower than" also covers the meaning of "lower than or equal to".

For ease of understanding, the terms involved in the present application are first introduced.

Reference Signal Received Power (RSRP): it is defined as a linear average of the power contribution of the resource particles carrying the cell's proprietary reference signal over an examined measurement bandwidth. It reflects a "logical distance" between a terminal and a base station.

Sidelink communication (SL): direct connection communication between two terminal devices. An interface between the two terminal devices is PC-5, in which sidelink communication supports three transmission modes: unicast, multicast and broadcast.

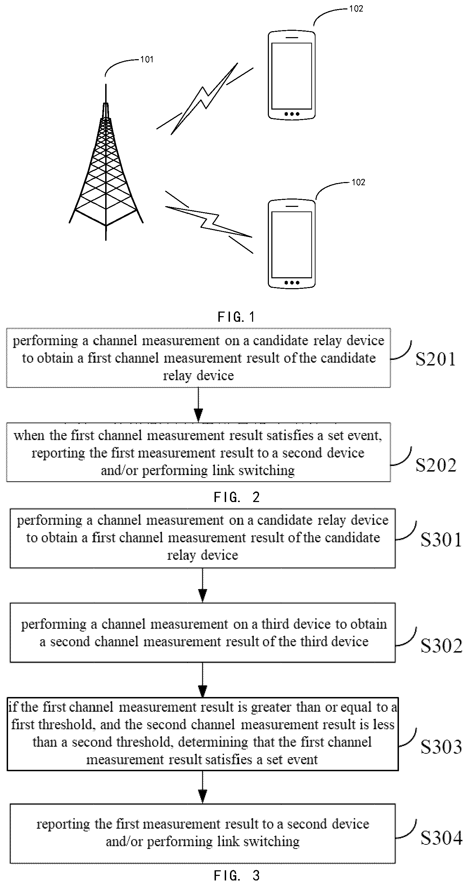

Please refer to FIG. 2, and FIG. 2 is a flow chart of a method for channel measurement provided by an embodiment of the present application; The method for channel measurement is performed by a first device, and as illustrated in FIG. 2, the method includes but is not limited to following steps.

At S201, a channel measurement is performed on a candidate relay device, to obtain a first channel measurement result of the candidate relay device.

Optionally, the candidate relay device includes a relay device in a relay scenario of user equipment to network (UE to NW, U2N) and a relay device in a relay scenario of user equipment to user equipment (UE to UE, U2U). Optionally, one or more candidate relay devices may be provided.

In the relay scenario of U2N, the first device may not be directly connected to the base station, but realize communication with the base station through another relay device, in which the first device not connected to the base station is called a remote device. For example, UE A may not be directly connected to the base station, but realize the communication with the base station through relay of another UE B, in which UE A not connected to the base station is called remote UE, UE B providing a relay function is called a relay UE, and the remote UE and the relay UE communicate with each other through sidelink unicast. The direct connection of the UE to the base station is called a direct link, and the connection of the UE to the base station through the relay UE is called an indirect link.

In the relay scenario of U2U, the first device may communicate with another device through the sidelink, and the communication between the two devices may also be realized through the relay device. For example, UE A may not be directly connected to UE B, but realize connection to UE B through the relay of UE C. UE A and UE C are remote UEs, UE B providing the relay function is the relay UE, and all UEs communicate with each other through the sidelink unicast. When UE A maintains the unicast connection directly with UE B, it is called a sidelink direct link, and when UE A maintains the unicast connection with UE B through the relay UE, it is called a sidelink indirect link.

In a working process of the first device in the above two scenarios, as the first device moves or the network situation changes, there may be a candidate relay device with a better channel condition corresponding to the first device. The first device can perform the channel measurement on the candidate relay to obtain the first measurement result corresponding to the candidate relay device.

Optionally, the first measurement result can reflect the channel quality between the first device and the candidate relay device. Optionally, the first channel measurement result may include at least one of the following parameters: RSRP for an SL communication signal and RSRP for an SL discovery signal.

At S202, the first channel measurement result satisfies a set event, and the first measurement result is reported to a second device and/or link switching is performed.

In order to realize that the first device can switch from a working indirect link or sidelink direct link to a link provided by a better candidate relay device, in embodiments of the present application, pre-set an event by which to judge whether to report the first measurement result and/or whether to perform the link switching, and when the link switching is performed, the measurement result may not be reported or the measurement result may be reported. Optionally, the set event can be determined based on a protocol convention or a network configuration or a predefined manner.

In a case where the first channel measurement result satisfies the set event, it indicates that the channel quality of the candidate relay device is good, and in order to improve the stability of communication or the security of information transmission, as a possible implementation, the first device reports the first measurement result to the second device, so that the second device can judge whether to perform the link switching.

In some implementations, in a case where the first device works in the indirect link and the second device is the network device, the first device may report the first measurement result to the network device. Optionally, the first device reports the first channel measurement result to the network device through a radio resource control (RRC) message.

In some other implementations, in a case where the first device works in a sidelink direct link and the peer device is the second device, the first device may report the first measurement result to the peer device. Optionally, the first device reports the first channel measurement result to the peer device through an SL RRC message. Optionally, the peer device may also report the first channel measurement result to the network device.

Optionally, the first device triggers and performs the link switching. In embodiments of the present application, the candidate relay device satisfying the set condition may be called a target relay device, and may be configured to provide the relay service for the first device. In some implementations, in a case where the first device works in the indirect link, the first device may switch from a current working first indirect link to another second indirect link including the target relay device. The first device may switch from a service relay device to a target relay device, and communicate with the network device through the target relay device. In some other implementations, in a case where the first device works in the sidelink direct link, the first device is not directly connected to the peer device any more, but is connected to the peer device through the relay of the target relay device. That is to say, the first device switches from the current working SL direct link to the SL indirect link including the target relay device.

For example, the first device (UE A) may be connected to the second device (UE B) through an SL unicast manner, and after a target relay device UE C is determined, the link switching may be performed. That is, UE A is not directly connected to UE B any more, but is connected through UE C, i.e., switching from the SL direct link to the SL indirect link including UE C.

For another example, the first device (UE A) may be connected to a network device (a base station) through a service relay device (UE D), and after the target relay device UE C is determined, the link switching may be performed. That is, UE A is not connected to the base station through UE D, but is connected to the base station through UE C.

As another possible implementation, the first device reports the first measurement result to the second device while performing the link switching.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 3, and FIG. 3 is a flow chart of a method for channel measurement provided by an embodiment of the present application; The method for channel measurement is performed by a first device, and as illustrated in FIG. 3, the method includes but is not limited to following steps.

At S301, a channel measurement is performed on a candidate relay device, to obtain a first channel measurement result of the candidate relay device.

For the specific introduction of step S301, please refer to the recitation of the relevant content in the above embodiments, which will not be repeated here.

At S302, a channel measurement is performed on a third device, to obtain a second channel measurement result of the third device.

The third device includes one of following types: a relay device serving the first device, or a device with an SL unicast connection to the first device. In some implementations, in a case where the first device works in the indirect link, the third device may be the relay device serving the first device. In some other implementations, in a case where the first device works in a sidelink direct link, the third device may be a peer device with an SL unicast to the first device.

Optionally, the second measurement result may reflect channel quality between the first device and the third device. Optionally, the second channel measurement result may include at least one of following parameters: RSRP for an SL communication signal (SL-RSRP), or RSRP for an SL discovery signal (SD-RSRP).

Optionally, the first device may determine the third device through an SL device identification and/or device characteristic. The device characteristic may include one of following characteristics: a service relay device, or a primary service relay device, or an auxiliary service relay device. The first device may receive configuration signaling sent by the third device, and the configuration signaling carries the SL device identification and/or device characteristic.

At S303, if the first channel measurement result is greater than or equal to a first threshold, and a second channel measurement result is less than a second threshold, it is determined that the first channel measurement result satisfies the set event.

Optionally, the first threshold and the second threshold may be preset. The first threshold and the second threshold are determined by one of following manners: a protocol convention, a network configuration, a predefinition, or a preconfiguration. The present disclosure does not limit this.

Optionally, the first threshold and the second threshold may be configured to the first device synchronously during a configuration procedure of the channel measurement, or independently of the configuration procedure of the channel measurement.

In embodiments of the present application, the first measurement result and the second measurement result include respective measurement values of a measurement target. The measurement target may include an SL communication signal and an SL discovery signal.

A first measurement value of each measurement target in the first measurement result may be compared to a respective first threshold. Further, a second measurement value of each measurement target in the second measurement result may be compared to a respective second threshold.

In some implementations, if each measurement target satisfies the set event, it may be determined that the first channel measurement result satisfies the set event. That is to say, if the first measurement value of each measurement target in the first measurement result is greater than or equal to the first threshold, and the second measurement value of each measurement target in the second measurement result is less than the second threshold, then it may be determined that the first channel measurement result satisfies the set event.

In some other implementations, when some of the measurement targets satisfy the set event, for example, 80% of the measurement targets satisfy the set event, then it can be determined that the first channel measurement result satisfies the set event. That is to say, if the first measurement values of 80% of the measurement targets in the first measurement result are greater than or equal to the first threshold, and the second measurement values of 80% of the measurement targets in the second measurement result are less than the second threshold, it may be determined that the first channel measurement result satisfies the set event.

At S304, the first measurement result is reported to the second device and/or the link switching is performed.

As a possible implementation, the first device reports the first measurement result to the second device, so that the second device can judge whether to perform the link switching.

In some implementations, in a case where the first device works in the indirect link and the second device is the network device, the first device may report the first measurement result to the network device. Optionally, the first device reports the first channel measurement result to the network device through an RRC message.

In some other implementations, in a case where the first device works in a sidelink direct link and the peer device is the second device, the first device may report the first measurement result to the peer device. Optionally, the first device reports the first channel measurement result to the peer device through an SL RRC message. Optionally, the peer device may also report the first channel measurement result to the network device.

As another possible implementation, the first device triggers and performs the link switching. In some implementations, in a case where the first device works in the indirect link, the first device may switch from a current working indirect link to another indirect link including the candidate relay device. The first device may switch from a service relay device to a candidate relay device satisfying a set condition, and continues to communicate with the network device through the candidate relay device. In some other implementations, in a case where the first device works in the sidelink direct link, the first device is not directly connected to the peer device any more, but is connected to the peer device through the relay of the candidate relay device satisfying the set event.

As another possible implementation, the first device reports the first measurement result to the second device while performing the link switching.

Optionally, the first measurement result includes one or more of:
the first measurement result of the candidate relay device;
an identification of the candidate relay device;
a service cell identification of a relay device in a relay scenario of user equipment to network (U2N);
a second measurement result of a relay device serving the first device or a peer device with an SL unicast connection to the first device;
the first measurement result of the candidate relay device satisfying the set event; or
the identification of the candidate relay device satisfying the device event.

It could be understood that the first device may perform measurement on the second device and the third device, and report the first measurement result for the second device and/or the second measurement result for the third device separately or simultaneously.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

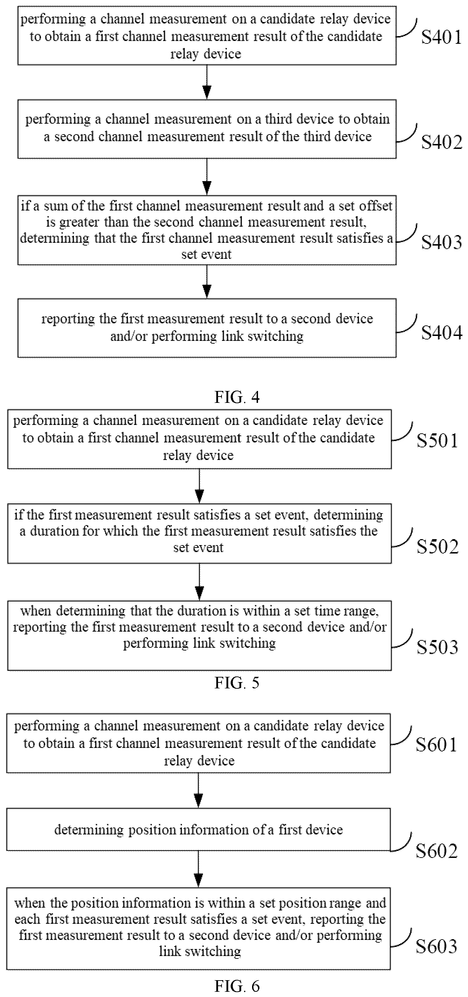

Please refer to FIG. 4, and FIG. 4 is a flow chart of a method for channel measurement provided by an embodiment of the present application; The method for channel measurement is performed by a first device, and as illustrated in FIG. 4, the method includes but is not limited to following steps.

At S401, a channel measurement is performed on a candidate relay device, to obtain a first channel measurement result of the candidate relay device.

For the specific introduction of step S401, please refer to the recitation of the relevant content in the above embodiments, which will not be repeated here.

At S402, a channel measurement is performed on a third device, to obtain a second channel measurement result of the third device.

For the specific introduction of step S402, please refer to the recitation of the relevant content in the above embodiments, which will not be repeated here.

At S403, if a sum of the first channel measurement result and a set offset is greater than the second channel measurement result, it is determined that the first channel measurement result satisfies the set event.

In embodiments of the present application, a plurality of set offsets may be configured or appointed. Optionally, the set offset is determined according to the parameters included in the first measurement result and the second measurement result. For example, when the first measurement result and the second measurement result both include RSRP for the SL discovery signal, i.e., SD-RSRP, the set offset may be determined as a set offset A. For another example, when the first measurement result and the second measurement result both include RSRP for the SL communication signal, i.e., SL-RSPR the set offset may be determined as a set offset B. For another example, when the first measurement result is SD-RSRP and the second measurement result is SL-RSRP, the set offset may be determined as a set offset C. For another example, when the first measurement result is SL-RSRP and the second measurement result is SD-RSRP, the set offset may be determined as a set offset D.

At S404, the first measurement result is reported to the second device and/or the link switching is performed.

For the specific introduction of step S404, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 5, and FIG. 5 is a flow chart of a method for channel measurement provided by an embodiment of the present application; The method for channel measurement is performed by a first device, and as illustrated in FIG. 5, the method includes but is not limited to following steps.

At S501, a channel measurement is performed on a candidate relay device, to obtain a first channel measurement result of the candidate relay device.

For the specific introduction of step S501, please refer to the recitation of the relevant content in the above embodiments, which will not be repeated here.

At S502, if the first measurement result satisfies the set event, a duration for which the first measurement result satisfies the set event is determined.

Optionally, the channel measurement is performed on the third device, to obtain a second channel measurement result of the third device. Regarding a process of the third device performing the channel measurement, please refer to the recitation of the relevant content in the above embodiments, which will not be repeated here.

Further, it is determined whether the first measurement result satisfies the set event according to the first measurement result and the second measurement result. In a possible implementation, if the first channel measurement result is greater than or equal to a first threshold and the second channel measurement result is less than a second threshold, it is determined that the first measurement result satisfies the set event. For the specific process, please refer to the recitation of the relevant content in the above embodiments, which will not be repeated here.

In another possible implementation, if a sum of the first channel measurement result and a set offset is greater than the second channel measurement result, it is determined that the first measurement result satisfies the set event. For the specific process, please refer to the recitation of the relevant content in the above embodiments, which will not be repeated here.

In embodiments of the present application, after determining that the first measurement result satisfies the set event, timing may be started, the first measurement result of the candidate relay device is continuously obtained, and the duration for which the first measurement result satisfies the set event is obtained. It should be noted that the first measurement result is continuously detected during the timing process, and if the first measurement result does not satisfy the set event, the timing will be stopped. Further, the first measurement result is detected again to satisfy the set event, and the timing is restarted.

Optionally, a set time range may be determined through a timer, the timer is started after the first measurement result satisfies the set event, and the timer is stopped if the first measurement result does not satisfy the set event.

At S503, when determining that the duration is within a set time range, the first measurement result is reported to the second device and/or the link switching is performed.

Optionally, the set time range may be determined through a protocol convention, a preconfiguration, a predefinition, or network indication. Optionally, the set time range may be determined through one indication or an agreed absolute time and a duration threshold.

The duration for which the first measurement result continuously satisfies the set event is compared, and in embodiments of the present application, the duration needs to be within the set time range, and the first measurement result is reported and/or the link switching is performed. Through the set time range, it is possible to ensure that the channel of the candidate relay device continuously satisfies the set event before reporting and/or link switching is performed.

For the specific introduction of reporting of the first measurement result and/or link switching, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 6, and FIG. 6 is a flow chart of a method for channel measurement provided by an embodiment of the present application; The method for channel measurement is performed by a first device, and as illustrated in FIG. 6, the method includes but is not limited to following steps.

At S601, a channel measurement is performed on a candidate relay device, to obtain a first channel measurement result of the candidate relay device.

For the specific introduction of step S601, please refer to the recitation of the relevant content in the above embodiments, which will not be repeated here.

At S602, position information of the first device is determined.

Optionally, the channel measurement is performed on the third device, to obtain a second channel measurement result of the third device. Regarding a process of the third device performing the channel measurement, please refer to the recitation of the relevant content in the above embodiments, which will not be repeated here.

Further, it is determined whether the first measurement result satisfies the set event according to the first measurement result and the second measurement result. In a possible implementation, if the first channel measurement result is greater than or equal to a first threshold and the second channel measurement result is less than a second threshold, it is determined that the first measurement result satisfies the set event. For the specific process, please refer to the recitation of the relevant content in the above embodiments, which will not be repeated here.

In another possible implementation, if a sum of the first channel measurement result and a set offset is greater than the second channel measurement result, it is determined that the first measurement result satisfies the set event. For the specific process, please refer to the recitation of the relevant content in the above embodiments, which will not be repeated here.

The first device may be in a mobile state, the position information will change, and optionally, the position information of the first device may be determined through a positioning system.

At S603, when the position information is within a set position range and each first measurement result satisfies the set event, the first measurement result is reported to the second device and/or the link switching is performed.

Optionally, the set position range may be determined through a protocol convention, a preconfiguration, a predefinition, or network indication. Optionally, the set position range may be zone identification or cell identification or absolute geographic position. Optionally, the absolute geographic position may be determined by a reference position point and a radius.

Further, the position information of the first device is compared with the set position range, and if the position information is within the set position range and the first measurement result continuously satisfies the set event, the first measurement result is reported and/or the link switching is performed. Optionally, in a case where the set position range is the zone identification or the cell identification, a corresponding coverage range may be determined based on the zone identification or the cell identification, and the position information of the first device is compared with the coverage range, to identify whether the position information is within the set position range. Optionally, in a case where the set position range is the absolute geographic position, a range may be determined based on the reference position point and the radius, and the position information of the first device is compared with the range, to identify whether the position information is within the set position range.

In embodiments of the present application, when the position information is within the set position range and each first measurement result satisfies the set event, the first measurement result is reported and/or the link switching is performed. Through the set position range, it is possible to ensure that the channel of the candidate relay device continuously satisfies the set event before reporting and/or link switching is performed.

For the specific introduction of reporting of the first measurement result and/or link switching, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

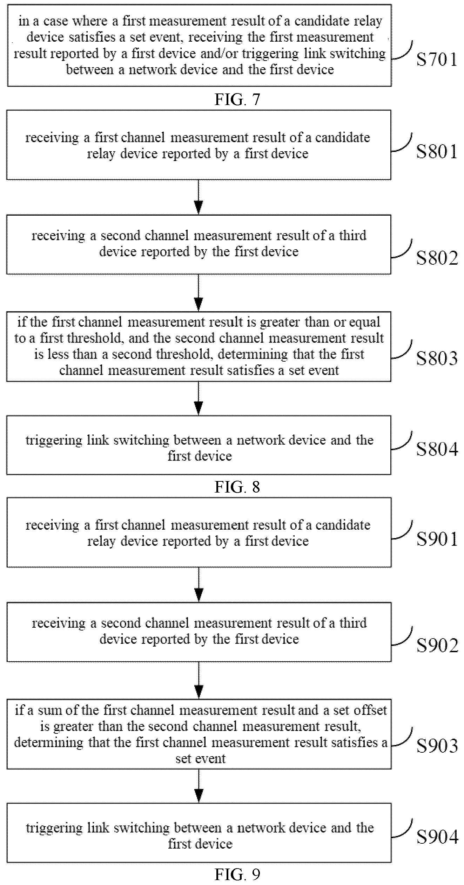

Please refer to FIG. 7, and FIG. 7 is a flow chart of a method for channel measurement provided by an embodiment of the present application; The method for channel measurement is performed by a network device, and as illustrated in FIG. 7, the method includes but is not limited to the following steps.

At S701, in a case where a first measurement result of a candidate relay device satisfies a set event, the first measurement result reported by a first device is received and/or link switching between the network device and the first device is triggered.

Optionally, the first measurement result can reflect the channel quality between the first device and the candidate relay device. Optionally, the first channel measurement result may include at least one of the following parameters: RSRP for an SL communication signal and RSRP for an SL discovery signal.

The first device may perform the channel measurement on the candidate relay device. In a case where the first measurement result of the candidate relay device satisfies the set event, the first device may send the first measurement result to the network device and correspondingly the network device may receive the first measurement result reported by the first device. Optionally, the network device may receive the first measurement result reported by the first device through an RRC message. Optionally, the network device may receive the first measurement result reported by the first device through a peer device. Optionally, the network device may receive the first measurement result reported by the first device through an RRC message.

Optionally, the network device may perform the link switching between the network device and the first device in a case where the first measurement result satisfies the set event.

In embodiments of the present application, the candidate relay device satisfying the set condition may be called a target relay device, and may be configured to provide the relay service for the first device. In some implementations, in a case where the first device works in an indirect link, the network device may switch the first device from a current working first indirect link to another second indirect link including a target relay device. That is to say, the network device switches the first device from a service relay device to a target relay device, and continues to communicate with the network device through the target relay device.

As an example, the first device (UE A) may be connected to the network device (a base station) through the service relay device (UE D), and after the target relay device UE C is determined, the link switching may be performed. That is, UE A is no longer connected to the base station through UE D, but is connected to the base station through UE C.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 8, and FIG. 8 is a flow chart of a method for channel measurement provided by an embodiment of the present application. The method for channel measurement is performed by a network device, and as illustrated in FIG. 8, the method includes but is not limited to the following steps.

At S801, a first channel measurement result of a candidate relay device reported by a first device is received.

For the specific introduction of step S801, please refer to the recitation of the relevant content in the above embodiments, which will not be repeated here.

At S802, a second channel measurement result of a third device reported by the first device is received.

The third device includes one of following types: a relay device serving the first device, or a device with an SL unicast connection to the first device. In some implementations, in a case where the first device works in the indirect link, the third device may be the relay device serving the first device. In some other implementations, in a case where the first device works in a sidelink direct link, the third device may be a peer device with an SL unicast to the first device.

Optionally, the second measurement result may reflect channel quality between the first device and the third device. Optionally, the second channel measurement result may include at least one of following parameters: RSRP for an SL communication signal or RSRP for an SL discovery signal.

Optionally, an SL device identification and/or device characteristic are sent to the first device, to determine the third device by the first device according to the SL device identification and/or device characteristic. The device characteristic includes one of following characteristics: a service relay device or a primary service relay device or an auxiliary service relay device Configuration signaling may be sent to the first device, and the SL device identification and/or device characteristic is carried in the configuration signaling.

At S803, if the first channel measurement result is greater than or equal to a first threshold and the second channel measurement result is less than a second threshold, it is determined that the first channel measurement result satisfies the set event.

For the specific introduction of step S803, please refer to the recitation of the relevant content in the above embodiments, which will not be repeated here.

At S804, link switching between the network device and the first device is triggered.

Optionally, the first measurement result includes one or more of:
the first measurement result of the candidate relay device;
an identification of the candidate relay device;
a service cell identification of a relay device in a relay scenario of user equipment to network (U2N);
a second measurement result of a relay device serving the first device or a peer device with an SL unicast connection to the first device;
the first measurement result of the candidate relay device satisfying the set event; or
the identification of the candidate relay device satisfying the device event.

For the specific introduction of switching of link between the network device and the first device, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 9, and FIG. 9 is a flow chart of a method for channel measurement provided by an embodiment of the present application; The method for channel measurement is performed by a network device, and as illustrated in FIG. 9, the method includes but is not limited to the following steps.

At S901, a first channel measurement result of a candidate relay device reported by a first device is received.

For the specific introduction of step S901, please refer to the recitation of the relevant content in the above embodiments, which will not be repeated here.

At S902, a second channel measurement result of a third device reported by the first device is received.

For the specific introduction of step S902, please refer to the recitation of the relevant content in the above embodiments, which will not be repeated here.

At S903, if a sum of the first channel measurement result and a set offset is greater than the second channel measurement result, it is determined that the first channel measurement result satisfies the set event.

For the specific introduction of step S903, please refer to the recitation of the relevant content in the above embodiments, which will not be repeated here.

At S904, link switching between the network device and the first device is triggered.

For the specific introduction of switching of link between the network device and the first device, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

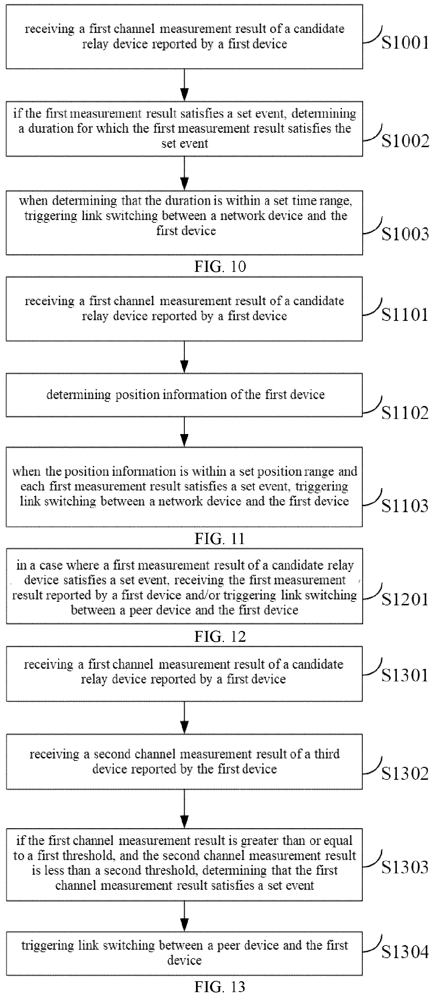

Please refer to FIG. 10, and FIG. 10 is a flow chart of a method for channel measurement provided by an embodiment of the present application; The method for channel measurement is performed by a network device, and as illustrated in FIG. 10, the method includes but is not limited to the following steps.

At S1001, a first channel measurement result of a candidate relay device reported by a first device is received.

For the specific introduction of step S1001, please refer to the recitation of the relevant content in the above embodiments, which will not be repeated here.

For the specific introduction of step S1001, please refer to the recitation of the relevant content in the above embodiments, which will not be repeated here.

At S1002, if the first measurement result satisfies the set event, a duration for which the first measurement result satisfies the set event is determined.

Optionally, the first device may perform the channel measurement on the third device, and report the second channel measurement result of the third device to the network device. Further, the network device may determine whether the first measurement result satisfies the set event according to the first measurement result and the second measurement result. In a possible implementation, if the first channel measurement result is greater than or equal to a first threshold and the second channel measurement result is less than a second threshold, it is determined that the first measurement result satisfies the set event. For the specific process, please refer to the recitation of the relevant content in the above embodiments, which will not be repeated here.

In another possible implementation, if a sum of the first channel measurement result and a set offset is greater than the second channel measurement result, it is determined that the first measurement result satisfies the set event. For the specific process, please refer to the recitation of the relevant content in the above embodiments, which will not be repeated here.

In embodiments of the present application, after the network device determines that the first measurement result satisfies the set event, timing may be started, the first measurement result of the candidate relay device is continuously obtained, and the duration for which the first measurement result satisfies the set event is obtained. It should be noted that the first measurement result is continuously detected during the timing process, and if the first measurement result does not satisfy the set event, the timing will be stopped. Further, the first measurement result is detected again to satisfy the set event, and the timing is restarted.

Optionally, a set time range may be determined through a timer, the timer is started after the first measurement result satisfies the set event, and the timer is stopped if the first measurement result does not satisfy the set event.

At S1003, when determining that the duration is within a set time range, the link switching between the network device and the first device is triggered.

Optionally, the set time range may be determined through a protocol convention, a preconfiguration, a predefinition, or network indication. Optionally, the set time range may be determined through one indication or an agreed absolute time and a duration threshold.

The duration for which the first measurement result continuously satisfies the set event is compared, and in embodiments of the present application, the duration needs to be within the set time range, and switching of link between the network device and the first device is performed. Through the set time range, it is possible to ensure that the channel of the candidate relay device continuously satisfies the set event before link switching is performed, to ensure the stability of the link switching.

For the specific introduction of link switching between the network device and the first device, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 11, and FIG. 11 is a flow chart of a method for channel measurement provided by an embodiment of the present application; The method for channel measurement is performed by a network device, and as illustrated in FIG. 11, the method includes but is not limited to the following steps.

At S1101, a first channel measurement result of a candidate relay device reported by a first device is received.

For the specific introduction of step S1101, please refer to the recitation of the relevant content in the above embodiments, which will not be repeated here.

At S1102, position information of the first device is determined.

Optionally, optionally, the first device may perform the channel measurement on the third device, and report the second channel measurement result of the third device to the network device. Further, the network device may determine whether the first measurement result satisfies the set event according to the first measurement result and the second measurement result. In a possible implementation, if the first channel measurement result is greater than or equal to a first threshold and the second channel measurement result is less than a second threshold, it is determined that the first measurement result satisfies the set event. For the specific process, please refer to the recitation of the relevant content in the above embodiments, which will not be repeated here.

In another possible implementation, if a sum of the first channel measurement result and a set offset is greater than the second channel measurement result, it is determined that the first measurement result satisfies the set event. For the specific process, please refer to the recitation of the relevant content in the above embodiments, which will not be repeated here.

The first device may be in a mobile state, the position information will change, and optionally, the position information of the first device may be determined through a positioning system.

At 1103, when the position information is within a set position range and each first measurement result satisfies the set event, link switching between the network device and the first device is triggered.

Optionally, the set position range may be determined through a protocol convention, a preconfiguration, a predefinition, or network indication. Optionally, the set position range may be zone identification or cell identification or absolute geographic position. Optionally, the absolute geographic position may be determined by a reference position point and a radius.

Further, the position information of the first device is compared with the set position range, and if the position information is within the set position range and the first measurement result continuously satisfies the set event, the first measurement result is reported and/or the link switching is performed. Optionally, in a case where the set position range is the zone identification or the cell identification, a corresponding coverage range may be determined based on the zone identification or the cell identification, and the position information of the first device is compared with the coverage range, to identify whether the position information is within the set position range. Optionally, in a case where the set position range is the absolute geographic position, a range may be determined based on the reference position point and the radius, and the position information of the first device is compared with the range, to identify whether the position information is within the set position range.

In embodiments of the present application, when the position information is within the set position range and each first measurement result satisfies the set event, the network device may perform switching of the link between the network device and the first device. Through the set position range, it is possible to ensure that the channel of the candidate relay device continuously satisfies the set event before link switching is performed.

For the specific introduction of switching of link between the network device and the first device, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 12, and FIG. 12 is a flow chart of a method for channel measurement provided by an embodiment of the present application. The method for channel measurement is performed by a peer device, and the peer device is a relay device serving the first device or a device with an SL unicast connection to the first device. As illustrated in FIG. 12, the method includes but is not limited to following steps.

At S1201, in a case where a first measurement result of a candidate relay device satisfies a set event, the first measurement result reported by a first device is received and/or link switching between the peer device and first device is triggered.

Optionally, the first measurement result can reflect the channel quality between the first device and the candidate relay device. Optionally, the first channel measurement result may include at least one of the following parameters: RSRP for an SL communication signal and RSRP for an SL discovery signal.

The first device may perform the channel measurement on the candidate relay device, and in a case where the first measurement result of the candidate relay device satisfies the set event, send the first measurement result to the peer device, and correspondingly the peer device may receive the first measurement result reported by the first device. For example, the peer device may receive the first measurement result reported by the first device through the peer device. Optionally, the peer device may receive the first measurement result reported by the first device through an RRC message.

Optionally, the peer device may perform the link switching between the peer device and first device in a case where the first measurement result satisfies the set event.

In embodiments of the present application, the candidate relay device satisfying the set condition may be called a target relay device, and may be configured to provide the relay service for the first device. In some implementations, in a case where the first device works in a sidelink direct link, the first device is not directly connected to the peer device, but a second device is connected to the peer device through relay of a target relay device. That is to say, the peer device may indicate the first device to switch from a current working SL direct link to an SL indirect link including the target relay device.

For example, the first device (UE A) may be connected to the second device (UE B) through an SL unicast manner, and after a target relay device UE C is determined, the link switching may be performed. That is, UE A is not directly connected to UE B any more, but is connected through UE C, i.e., switching from the SL direct link to the SL indirect link including UE C.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 13, and FIG. 13 is a flow chart of a method for channel measurement provided by an embodiment of the present application; The method for channel measurement is performed by a peer device, and the peer device is a relay device serving the first device or a device with an SL unicast connection to the first device. As illustrated in FIG. 13, the method includes but is not limited to following steps.

At S1301, a first channel measurement result of a candidate relay device reported by a first device is received.

For the specific introduction of step S1301, please refer to the recitation of the relevant content in the above embodiments, which will not be repeated here.

At S1302, a second channel measurement result of a third device reported by the first device is received.

For the specific introduction of step S1302, please refer to the recitation of the relevant content in the above embodiments, which will not be repeated here.

At S1303, if the first channel measurement result is greater than or equal to a first threshold and the second channel measurement result is less than a second threshold, it is determined that the first channel measurement result satisfies the set event.

For the specific introduction of step S1303, please refer to the recitation of the relevant content in the above embodiments, which will not be repeated here.

At S1304, link switching between the peer device and the first device is triggered.

Optionally, the first measurement result includes one or more of:
the first measurement result of the candidate relay device;
an identification of the candidate relay device;
a service cell identification of a relay device in a relay scenario of user equipment to network (U2N);
a second measurement result of a relay device serving the first device or a peer device with an SL unicast connection to the first device;
the first measurement result of the candidate relay device satisfying the set event; or
the identification of the candidate relay device satisfying the device event.

For the specific introduction of link switching between the network device and the first device, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

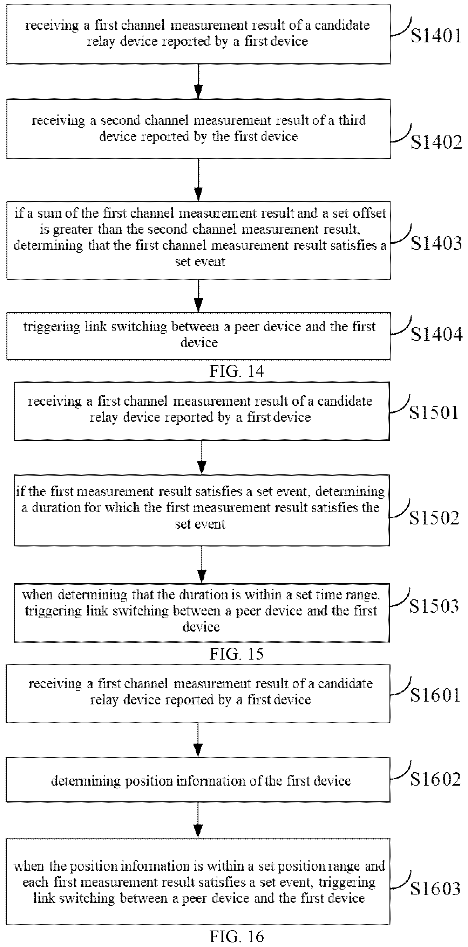

Please refer to FIG. 14, and FIG. 14 is a flow chart of a method for channel measurement provided by an embodiment of the present application; The method for channel measurement is performed by a peer device, and the peer device is a relay device serving the first device or a device with an SL unicast connection to the first device. As illustrated in FIG. 14, the method includes but is not limited to following steps.

At S1401, a first channel measurement result of a candidate relay device reported by a first device is received.

For the specific introduction of step S1401, please refer to the recitation of the relevant content in the above embodiments, which will not be repeated here.

At S 1402, a second channel measurement result of a third device reported by the first device is received.

For the specific introduction of step S1402, please refer to the recitation of the relevant content in the above embodiments, which will not be repeated here.

At S1403, if a sum of the first channel measurement result and a set offset is greater than the second channel measurement result, it is determined that the first channel measurement result satisfies the set event.

For the specific introduction of step S1403, please refer to the recitation of the relevant content in the above embodiments, which will not be repeated here.

At S1404, link switching between the peer device and the first device is triggered.

For the specific introduction of link switching between the peer device and the first device, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 15, and FIG. 15 is a flow chart of a method for channel measurement provided by an embodiment of the present application; The method for channel measurement is performed by a peer device, and the peer device is a relay device serving the first device or a device with an SL unicast connection to the first device. As illustrated in FIG. 15, the method includes but is not limited to following steps.

At S1501, a first channel measurement result of a candidate relay device reported by a first device is received.

For the specific introduction of step S1501, please refer to the recitation of the relevant content in the above embodiments, which will not be repeated here.

For the specific introduction of step S1501, please refer to the recitation of the relevant content in the above embodiments, which will not be repeated here.

At S1502, if the first measurement result satisfies the set event, a duration for which the first measurement result satisfies the set event is determined.

Optionally, the first device may perform the channel measurement on the third device, and report the second channel measurement result of the third device to the peer device. Further, the peer device may determine whether the first measurement result satisfies the set event according to the first measurement result and the second measurement result.

For the specific introduction of step S1502, please refer to the recitation of the relevant content in the above embodiments, which will not be repeated here.

At S1503, when the duration is within a set time range, the link switching between the peer device and the first device is triggered.

For the specific introduction of link switching between the peer device and the first device, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 16, and FIG. 16 is a flow chart of a method for channel measurement provided by an embodiment of the present application; The method for channel measurement is performed by a peer device, and the peer device is a relay device serving the first device or a device with an SL unicast connection to the first device. As illustrated in FIG. 16, the method includes but is not limited to following steps.

At S1601, a first channel measurement result of a candidate relay device reported by a first device is received.

For the specific introduction of step S1601, please refer to the recitation of the relevant content in the above embodiments, which will not be repeated here.

At S1602, position information of the first device is determined.

For the specific introduction of step S1602, please refer to the recitation of the relevant content in the above embodiments, which will not be repeated here.

At S1603, when the position information is within the set position range and each first measurement result satisfies the set event, the link switching between the peer device and the first device.

For the specific introduction of link switching between the peer device and the first device, please refer to the recitation of the relevant content in the above embodiments, which will not be repeated here.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

In embodiments provided by the present application, the methods provided by embodiments of the present application are described from the perspectives of network device and terminal equipment (including the first device and the peer device), respectively. **In** order to realize functions in the methods provided by embodiments of the present application, the network device and the terminal device may include a hardware structure, a software module, and realize the functions in the form of a hardware structure, a software module, or a hardware structure plus a software module. One of the above functions can be executed in the form of a hardware structure, a software module, or a hardware structure plus a software module.

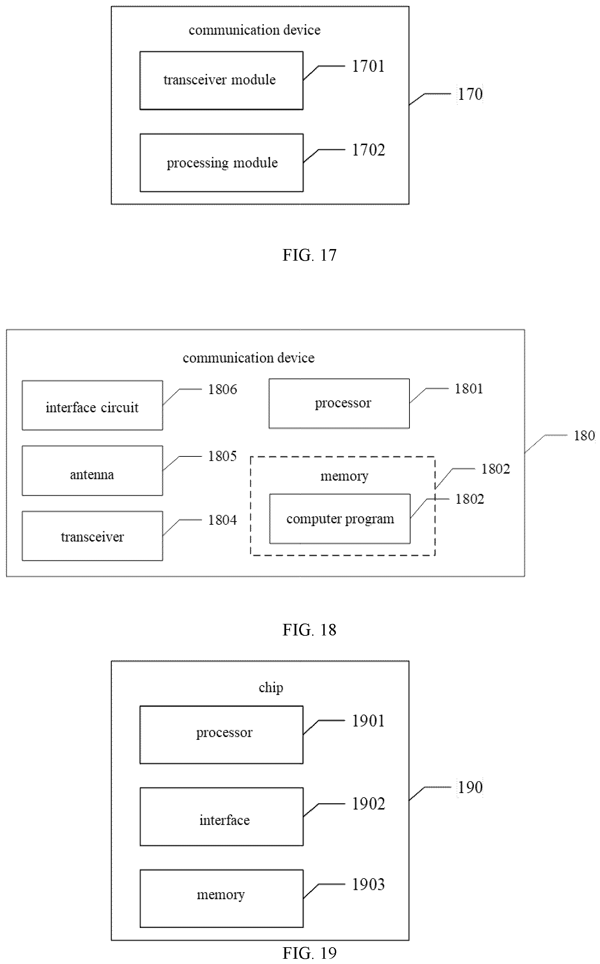

Please refer to FIG. 17, which is a structural schematic diagram of a communication device 170 provided by an embodiment of the present application. The communication device 170 illustrated in FIG. 17 may include a transceiver module 1701 and a processing module 1702. The transceiver module 1701 may include a transmitting module and/or a receiving module, the transmitting module is configured to realize a transmitting function, the receiving module is configured to realize a receiving function, and the transceiver module 1701 may realize the transmitting function and/or the receiving function.

The communication device 170 may be a terminal device, or a device in the terminal device, or a device that can be used in conjunction with the terminal device. The communication device 170 may be the first device in the above embodiments, or the peer device in the above embodiments. Alternatively, the communication device 170 may be the network device, or a device in the network device, or a device that can be used in conjunction with the network device.

The communication device 170 is the first device:
the processing module 1702 is configured to perform a channel measurement on a candidate relay device, to obtain a first channel measurement result of the candidate relay device, and trigger performing of link switching when the first channel measurement result satisfies a set event; and/or
the transceiver module 1701 is configured to report the first measurement result to a second device when the first channel measurement result satisfies the set event.

Optionally, the transceiver module 1701 is further configured to report the first channel measurement result to a network device through a radio resource control (RRC) message in a case where the second device is the network device; or
optionally, the transceiver module 1701 is further configured to report the first channel measurement result to a peer device through a sidelink (SL) RRC message in a case where the second device is the peer device; or
optionally, the transceiver module 1701 is further configured to report the first channel measurement result to the peer device through the SL RRC message, and report the first channel measurement result to the network device through the peer device.

Optionally, the processing module 1702 is further configured to perform the channel measurement on the third device, to obtain a second channel measurement result of the third device.

Optionally, the third device includes one of following types:
a relay device serving the first device; or
a peer device with an SL unicast connection to the first device.

Optionally, the processing module 1702 is further configured to determine the peer device through an SL device identification and/or device characteristic, and the device characteristic includes one of followings characteristics: a service relay device or a primary service relay device or an auxiliary service relay device.

Optionally, the processing module 1702 is further configured to determine that the first measurement result satisfies the set event when the first channel measurement result is greater than or equal to a first threshold and the second channel measurement result is less than a second threshold.

Optionally, the processing module 1702 is further configured to determine that the first measurement result satisfies the set event when a sum of the first channel measurement result and a set offset is greater than the second channel measurement result.

Optionally, each of the first channel measurement result and the second channel measurement result includes at least one of following parameters: reference signal received power (RSPR) for an SL communication signal or reference signal received power (RSRP) for an SL discovery signal.

Optionally, the processing module 1702 is further configured to determine the set offset according to the parameters included in the first measurement result and the second measurement result.

Optionally, the processing module 1702 is further configured to determine a duration for which the first measurement result satisfies the set event; and report the first measurement result and/or perform the link switching when determining that the duration is within a set time range.

Optionally, the processing module 1702 is further configured to determine position information of the first device, and report the first measurement result and/or perform the link switching when the position information is within a set position range and each first measurement result satisfies the set event.

Optionally, the first measurement result includes one or more of:
the first measurement result of the candidate relay device;
an identification of the candidate relay device;
a service cell identification of a relay device in a relay scenario of user equipment to network (U2N);
a second measurement result of a relay device serving the first device or a peer device with an SL unicast connection to the first device;
the first measurement result of the candidate relay device satisfying the set event; or
the identification of the candidate relay device satisfying the device event.

Optionally, the processing module 1702 is further configured to determine a current working link of the first device; and when the candidate relay device satisfying the set event is a target relay device, determine a target link including the target relay device and switch from the current working link to the target link.

Optionally, the processing module 1702 is further configured to, when the current working link is an SL direct link, determine an SL indirect link to the target relay device and switch from the SL direct link to the SL indirect link; or when the current working link is a first indirect link, determine a second indirect link to the target relay device and switch from the first indirect link to the second indirect link.

The communication device 170 is the network device:
the transceiver module 1701 is configured to receive a first measurement result reported by a first device in a case where the first measurement result of a candidate relay device satisfies a set event; and/or
the processing module 1702 is configured to perform link switching between the network device and the first device in a case where the first measurement result of the candidate relay device satisfies the set event.

Optionally, the transceiver module 1701 is further configured to receive the first channel measurement result reported by the first device through an RRC message.

Optionally, the transceiver module 1701 is further configured to send an SL device identification or device characteristic to the first device, and the device characteristic includes one of following characteristics: a service relay device or a primary service relay device or an auxiliary service relay device; and the first device is configured to determine a third device for a second measurement according to the SL device identification and/or device characteristic.

Optionally, the transceiver module 1701 is further configured to receive the second channel measurement result of the third device reported by the first device.

Optionally, the processing module 1702 is further configured to determine that the first measurement result satisfies the set event when the first channel measurement result is greater than or equal to a first threshold and the second channel measurement result is less than a second threshold.

Optionally, the processing module 1702 is further configured to determine that the first measurement result satisfies the set event when a sum of the first channel measurement result and a set offset is greater than the second channel measurement result.

Optionally, each of the first channel measurement result and the second channel measurement result includes at least one of parameters: RSRP for an SL communication signal or RSRP for an SL discovery signal.

Optionally, the processing module 1702 is further configured to determine the set offset according to the parameters included in the first measurement result and the second measurement result.

Optionally, the processing module 1702 is further configured to determine a duration for which the first measurement result satisfies the reported event; and trigger link switching when determining that the duration is within a set time range.

Optionally, the processing module 1702 is further configured to determine position information of the first device; and trigger the link switching when the position information is within a set position range and each first measurement result satisfies the set event.

Optionally, the first measurement result includes one or more of:
the first measurement result of the candidate relay device;
an identification of the candidate relay device;
a service cell identification of a relay device in a relay scenario of user equipment to network (U2N);
a second measurement result of the peer device;
the first measurement result of the candidate relay device satisfying the set event; or
the identification of the candidate relay device satisfying the device event.

Optionally, the processing module 1702 is further configured to determine a current working link of the first device; and when the candidate relay device satisfying the set event is a target relay device, determine a target link including the target relay device and switch from the current working link to the target link.

Optionally, the processing module 1702 is further configured to, when the current working link is a first indirect link, determine a second indirect link to the target intermediate device, and switch from the first indirect link to the second indirect link.

The communication device 170 is a peer device, and the peer device is a relay device serving the first device or a device with an SL unicast connection to the first device.

The transceiver module 1701 is configured to receive a first measurement result reported by the first device in a case where the first measurement result of a candidate relay device satisfies a set event; and
the processing module 1702 is configured to perform link switching between the peer device and the first device in a case where the first measurement result of the candidate relay device satisfies the set event.

Optionally, the transceiver module 1701 is further configured to receive the first channel measurement result reported by the first device through an SL RRC message; and/or report the first channel measurement result to the network device.

Optionally, the transceiver module 1701 is further configured to send an SL device identification or device characteristic to the first device, and the device characteristic includes one of following characteristics: a service relay device or a primary service relay device or an auxiliary service relay device; and the first device is configured to determine a third device for a second measurement according to the SL device identification and/or device characteristic.

Optionally, the transceiver module 1701 is further configured to receive the second channel measurement result of the third device reported by the first device.

Optionally, the processing module 1702 is further configured to determine that the first measurement result satisfies the set event when the first channel measurement result is greater than or equal to a first threshold and the second channel measurement result is less than a second threshold.

Optionally, the processing module 1702 is further configured to determine that the first measurement result satisfies the set event when a sum of the first channel measurement result and a set offset is greater than the second channel measurement result.

Optionally, each of the first channel measurement result and the second channel measurement result includes at least one of parameters: RSRP for an SL communication signal or RSRP for an SL discovery signal.

Optionally, the processing module 1702 is further configured to determine the set offset according to the parameters included in the first measurement result and the second measurement result.

Optionally, the processing module 1702 is further configured to determine a duration for which the first measurement result satisfies the reported event, and trigger the link switching when determining that the duration is within a set time range.

Optionally, the processing module 1702 is further configured to determine position information of the first device, and trigger the link switching when the position information is within a set position range and each first measurement result satisfies the set event.

Optionally, the first measurement result includes one or more of:
the first measurement result of the candidate relay device;
an identification of the candidate relay device;
a service cell identification of a relay device in a relay scenario of user equipment to network (U2N);
a second measurement result of the peer device;
the first measurement result of the candidate relay device satisfying the set event; or
the identification of the candidate relay device satisfying the device event.

Optionally, the processing module 1702 is further configured to determine a current working link of the first device, and when a candidate relay device satisfying the set event is a target relay device, determine a target link including the target relay device and switch from the current working link to the target link.

Optionally, the processing module 1702 is further configured to, when the current working link is an SL direct link, determine an SL indirect link to the target relay device and switch from the SL direct link to the SL indirect link.

In embodiments of the present application, the channel measurement may be performed on the candidate relay device, and a trigger judgment of reporting or switching can be performed through the set event, thus a relay device more suitable for providing a relay service can be determined through the channel measurement, the switching between relay devices, i.e., switching between indirect links can be realized through a reporting or an active link switching, and switching from a direct link to an indirect link including a relay device can also be realized, enhancing the mode of link switching of the device.

Please refer to FIG. 18, and FIG. 18 is a structural schematic diagram of another communication device 180 provided by an embodiment of the present application. The communication device 180 may be a network device, can also be a terminal device, can also be a chip, a chip system, or a processor, etc., that supports the network device to realize the above methods, and can also be a chip, a chip system, or a processor, etc., that supports the terminal device to realize the above methods. The device can be used to realize the method described in the above method embodiments, and can specifically refer to the description in the above method embodiments.

The communication device 180 may include one or more processors 1801. The processor 1801 can be a general-purpose processor or a specialized processor. For example, it can be a baseband processor or a central processing unit. The baseband processor can be used to process the communication protocol and communication data, and the central processing unit can be used to control the communication device (such as base station, baseband chip, terminal device, terminal device chip, DU or CU, etc.), execute a computer program, and process computer program data.

Optionally, the communication device 90 may also include one or more memories 1802, and a computer program 1803 may be stored therein. The processor 1801 executes the computer program 1803 to cause the communication device 180 to perform the method described in the method embodiments. Optionally, data may be stored in the memory 1802. The communication device 180 and the memory 1802 can be set separately or integrated.

Optionally, the communication device 180 may also include a transceiver 1804 and an antenna 1805. The transceiver 1804 can be called a transceiver unit, a transceiver machine, or a transceiver circuit, etc., and is configured to realize the transceiver function. The transceiver 1804 may include a receiver and a transmitter, the receiver may be called a receiving machine or a receiving circuit, etc., and is configured to realize the receiving function; and the transmitter can called a transmitting machine or a transmitting circuit, etc., and is configured to realize the transmitting function.

Optionally, the communication device 180 may also include one or more interface circuits 1806. The interface circuit 1806 is configured to receive code instructions and transmit them to the processor 1801. The processor 1801 runs the code instructions to cause the communication device 180 to perform the method described in the above method embodiments.

The communication device 180 is a terminal device configured to realize the function of the first device in the forgoing embodiments.

The communication device 180 is a network device configured to realize the function of the network device in the forgoing embodiments.

The communication device 180 is a terminal device configured to realize the function of the peer device in the forgoing embodiments.

In an implementation, the processor 1801 may include a transceiver configured to realize the receiving and transmitting function. For example, the transceiver can be a transceiver circuit, or an interface, or an interface circuit. The transceiver circuit, interface, or interface circuit configured to realize the receiving and transmitting functions can be separate or integrated. The transceiver circuit, interface, or interface circuit may be configured to read and write code/data, or the transceiver circuit, interface, or interface circuit may be configured for the transmission or transfer of signals.

In an implementation, the processor 1801 may store a computer program 1803, and the computer program 1803 runs on the processor 1801 to cause the communication device 180 to perform the method described in the above method embodiments. The computer program 1803 may be solidified in the processor 1801, in which case the processor 1801 may be realized by hardware.

In an implementation, the communication device 180 may include a circuit, and the circuit can realize the function of transmitting or receiving or communication in the forgoing method embodiments. The processor and transceiver described in the present application can be realized in integrated circuits (ICs), analog ICs, radio frequency integrated circuits (RFICs), mixed-signal ICs, application-specific integrated circuits (ASICs), printed circuit boards (PCBs), electronic devices, etc. The processor and transceiver can also be fabricated using a variety of IC process technologies, such as complementary metal oxide semiconductor (CMOS), nMetal-oxide-semiconductor (NMOS), and positive channel metal oxide semiconductor, PMOS), bipolar junction transistor (BJT), bipolar CMOS (BiCMOS), silicon germanium (SiGe), gallium arsenide (GaAs), etc.

The communication device described in the above embodiments may be a network device, but the scope of the communication device described in the present application is not limited to this, and the structure of the communication device may not be limited by FIG.18. The communication device can be a stand-alone device or part of a larger device. For example, the communication device may be:
(1) a stand-alone integrated circuit (IC), or chip, or, chip system or subsystem;
(2) a collection with one or more ICs, optionally, the IC collection may also include storage parts configured to store data, computer programs;
(3) an ASIC, such as Modem;
(4) a module that can be embedded in other devices;
(5) a receiver, terminal device, intelligent terminal device, cellular phone, wireless device, handset, mobile unit, vehicle device, network device, cloud device, artificial intelligence device, etc.;
(6) Others, etc.

For a case where the communication device can be a chip or a chip system, please refer to a structural schematic diagram of a chip illustrated in FIG. 19. The chip illustrated in FIG. 19 includes a processor 1901 and an interface 1902. The number of processors 1901 can be one or more, and the number of interfaces 1902 can be multiple.

The chip 190 may be configured to realize the function of the first device in embodiments of the present application.

The chip 190 may be configured to realize the function of the network device in embodiments of the present application.

The chip 190 may be configured to realize the function of the peer device in embodiments of the present application.

Optionally, the chip also includes a memory 1903, and the memory 1903 is configured to store the necessary computer programs and data.

A person skilled in the art may also understand that the various illustrative logical blocks and steps listed in the embodiments of the present application may be realized by electronic hardware, computer software, or a combination of both. Whether such function is achieved in hardware or software depends on the specific application and the design requirements of the system as a whole. A person skilled in the art may use various methods to realize the function for each specific application, but such realization shall not be construed as going beyond the scope of protection of the embodiments of the present application.

Embodiments of the present application also provide a communication system, the communication system includes a communication device serving as a terminal device and a communication device serving as a network device in the forgoing embodiment of FIG. 17, or the system includes a communication device serving as a terminal device and a communication device serving as a network device in the forgoing embodiment of FIG. 18.

The present application also provides a readable storage medium on which instructions are stored to realize the function of any of the above method embodiments when the instructions are executed by a computer.

The present application also provides a computer program product that, when executed by a computer, realizes the function of any of the above method embodiments.

The above embodiments may be realized in whole or in part by software, hardware, firmware, or any combination thereof. When realized using software, it can be realized in whole or in part in the form of a computer program product. The computer program product includes one or more computer programs. When the computer program is loaded and executed on a computer, a process or function described in the embodiments of the present application is produced, in whole or in part. The computer may be a general-purpose computer, a special-purpose computer, a computer network, or other programmable device. The computer program may be stored in a computer-readable storage medium, or transmitted from one computer-readable storage medium to another computer-readable storage medium, for example, the computer program may be transmitted from one website, computer, server, or data center by wired (e.g., coaxial cable, optical fiber, digital subscriber line, DSL)) or wireless (e.g., infrared, wireless, microwave, etc.) to another website, computer, server or data center. The computer-readable storage medium may be any available medium that the computer can access or a data storage device such as a server, a data center, etc., which is integrated with one or more available media. The available medium may be a magnetic medium (e.g., floppy disk, hard disk, magnetic tape), optical medium (e.g., high-density digital video disc (DVD)), or semiconductor medium (e.g., solid state disk (SSD)).

A person skilled in the art may understand that the first and second numerical numbers involved in the present application are only for the convenience of description, and are not used to limit the scope of the embodiments of the present application, and also indicate the order.

At least one in the present application may also be described as one or more, and plurality may be two, three, four, or more, without limitation in the present application. **In** the embodiments of the present application, for a type of technical feature, technical features in the type of technical features are distinguished by "first", "second", "third", "A", "B", "C" and "D", etc., and the technical features described by "first", "second", "third", "A", "B", "C" and "D" are not in order or in order of magnitude.

The correspondence shown in the tables in the present application can be configured or predefined. The values of the information in each table are only examples and can be configured to other values, and are not limited to the present application. When configuring the correspondence between information and parameters, it is not necessary to configure all the correspondences shown in each table. For example, in the table in the present application, the correspondence shown in some rows can also be left unconfigured. For another example, appropriate deformation adjustments based on the above table, such as splitting, merging, etc. may be made. The names of the parameters indicated in the headings of the tables above may also be other names that are understandable to the communication device, and the values or representations of the parameters may also be other values or representations that are understandable to the communication device. Other data structures can also be used in the realization of the above tables, such as arrays, queues, containers, stacks, linear tables, pointers, linked lists, trees, graphs, structs, classes, heaps, hash tables, or hash tables.

The predefinition in the present application can be understood as defining, predefining, storing, pre-storing, pre-negotiating, pre-configuring, curing, or pre-firing.

A person skilled in the art may realize that the units and algorithm steps of each example described in combination with the embodiments disclosed herein can be realized by electronic hardware, or a combination of computer software and electronic hardware. Whether these functions are performed in hardware or software depends on the specific application and design constraints of the technical solution. A skilled person may use different methods to realize the described function for each specific application, but such realization shall not be considered as going beyond the scope of the present application.

Those skilled in the art can clearly understand that, for the convenience and conciseness of the description, the specific working process of the system, device and unit described above can refer to the corresponding process in the forgoing method embodiments, which will not be repeated herein.

The above-described are merely specific implementations of the present application, but the protection scope of the present application is not limited to this. The conceivable change or alternative by those skilled in the art within the technical scope disclosed by the present application should be covered in the protection scope of the present application. Therefore, the protection scope of the present application is subject to the protection scope of the claims.

## Claims

1. A method for channel measurement, performed by a first device, comprising:
performing a channel measurement on a candidate relay device to obtain a first channel measurement result of the candidate relay device; and
when the first channel measurement result satisfies a set event,
reporting the first measurement result to a second device and/or performing link switching.

2. The method according to claim 1, wherein reporting the first measurement result to the second device comprises:
when the second device is a network device, reporting the first channel measurement result to the network device through a radio resource control (RRC) message; or
when the second device is a peer device, reporting the first channel measurement result to the peer device through a sidelink (SL) RRC message; or
reporting the first channel measurement result to the peer device through the SL RRC message, and reporting the first channel measurement result to the network device through the peer device.

3. The method according to claim 1 or 2, further comprising:
performing a channel measurement on a third device to obtain a second channel measurement result of the third device.

4. The method according to claim 3, wherein the third device comprises one of following types:
a relay device serving the first device; or
a peer device with an SL unicast connection to the first device.

5. The method according to claim 4, further comprising:
determining the peer device through an SL device identification and/or device characteristic, wherein the device characteristic comprises one of following characteristics:
a service relay device;
a primary service relay device; or
an auxiliary service relay device.

6. The method according to claim 3, wherein satisfying the set event comprises:
the first channel measurement result being greater than or equal to a first threshold, and the second channel measurement result being less than a second threshold.

7. The method according to claim 3, wherein satisfying the set event comprises:
a sum of the first channel measurement result and a set offset being greater than the second channel measurement result.

8. The method according to any one of claims 3-7, wherein each of the first channel measurement result and the second channel measurement result comprises at least one of following parameters:
reference signal received power for a SL communication signal (SL-RSRP); or
reference signal received power for a SL discovery signal (SD-RSRP).

9. The method according to claim 7, further comprising:
determining the set offset according to the parameters comprised in the first measurement result and the second measurement result.

10. The method according to claim 1, wherein when the first channel measurement result satisfies the set event, reporting the first measurement result to the second device and/or performing the link switching comprises:
determining a duration for which the first measurement result satisfies the set event; and
when determining that the duration is within a set time range, reporting the first measurement result to the second device and/or performing the link switching.

11. The method according to claim 1, wherein when the first channel measurement result satisfies the set event, reporting the first measurement result to the second device and/or performing the link switching comprises:
determining position information of the first device; and
when the position information is within a set position range and each first measurement result satisfies the set event, reporting the first measurement result to the second device and/or performing the link switching.

12. The method according to claim 1, wherein the first measurement result comprises one or more of:
the first measurement result of the candidate relay device;
an identification of the candidate relay device;
a service cell identification of a relay device in a relay scenario of user equipment to network (U2N);
a second measurement result of a relay device serving the first device or a peer device with an SL unicast connection to the first device;
the first measurement result of the candidate relay device satisfying the set event; or
the identification of the candidate relay device satisfying the device event.

13. The method according to claim 1, further comprising:
determining a current working link of the first device; and
when the candidate relay device satisfying the set event is a target relay device, determining a target link comprising the target relay device, and switching from the current working link to the target link.

14. The method according to claim 13, further comprising:
when the current working link is an SL direct link, determining an SL indirect link to the target relay device, and switching from the SL direct link to the SL indirect link; or
when the current working link is a first indirect link, determining a second indirect link to the target relay device, and switching from the first indirect link to the second indirect link.

15. A method for channel measurement, performed by a network device, comprising:
in a case where a first measurement result of a candidate relay device satisfies a set event, receiving the first measurement result reported by a first device and/or triggering link switching between the network device and the first device.

16. The method according to claim 15, wherein receiving the first measurement result reported by the first device comprises:
receiving the first channel measurement result reported by the first device through an RRC message.

17. The method according to claim 15, further comprising:
sending an SL device identification or device characteristic to the first device, wherein the device characteristic comprises one of following characteristics:
a service relay device;
a primary service relay device; or
an auxiliary service relay device; and
the first device is configured to determine a third device for performing a second measurement according to the SL device identification and/or device characteristic.

18. The method according to claim 17, further comprising:
receiving a second channel measurement result of the third device reported by the first device.

19. The method according to claim 18, wherein satisfying the set event comprises:
the first channel measurement result being greater than or equal to a first threshold, and the second channel measurement result being less than a second threshold.

20. The method according to claim 18, wherein satisfying the set event comprises:
a sum of the first channel measurement result and a set offset being greater than the second channel measurement result.

21. The method according to any one of claims 18-20, wherein each of the first channel measurement result and the second channel measurement result comprise at least one of following parameters:
SL-RSRP; or
SD-RSRP.

22. The method according to claim 20, further comprising:
determining the set offset according to the parameters comprised in the first measurement result and the second measurement result.

23. The method according to claim 15, wherein the first channel measurement result satisfying the set event and triggering the link switching comprises:
determining a duration for which the first measurement result satisfies the reported event; and
when determining that the duration is within a set time range, triggering the link switching.

24. The method according to claim 15, wherein the first channel measurement result satisfying the set event and triggering the link switching comprises:
determining position information of the first device; and
when the position information is within the set position range and each first measurement result satisfies the set event, triggering the link switching.

25. The method according to claim 15, wherein the first measurement result comprises one or more of:
the first measurement result of the candidate relay device;
an identification of the candidate relay device;
a service cell identification of a relay device in a relay scenario of user equipment to network (U2N);
a second measurement result of a relay device serving the first device or a peer device with an SL unicast connection to the first device;
the first measurement result of the candidate relay device satisfying the set event; or
the identification of the candidate relay device satisfying the device event.

26. The method according to claim 15, further comprising:
determining a current working link of the first device; and
when the candidate relay device satisfying the set event is a target relay device, determining a target link comprising the target relay device, and switching from the current working link to the target link.

27. The method according to claim 26, further comprising:
when the current working link is a first indirect link, determining a second indirect link to the target intermediate device, and switching from the first indirect link to the second indirect link.

28. A method for channel measurement, performed by a peer device, the peer device being a relay device serving a first device or a device with an SL unicast connection to the first device, the method comprising:
in a case where a first measurement result of an candidate relay device satisfies a set event, receiving the first measurement result reported by the first device and/or triggering link switching between the peer device and the first device.

29. The method according to claim 28, wherein receiving the first measurement result reported by the first device comprises:
receiving the first channel measurement result reported by the first device through an SL RRC message; and/or reporting the first channel measurement result to the network device.

30. The method according to claim 28, further comprising:
sending an SL device identification or device characteristic to the first device, wherein the device characteristic comprises one of following characteristics: a service relay device or a primary service relay device or an auxiliary service relay device; and the first device is configured to determine a third device for performing a second measurement according to the SL device identification and/or device characteristic.

31. The method according to claim 30, further comprising:
receiving a second channel measurement result of the third device reported by the first device.

32. The method according to claim 31, wherein satisfying the set event comprises:
the first channel measurement result being greater than or equal to a first threshold, and the second channel measurement result being less than a second threshold.

33. The method according to claim 31, wherein satisfying the set event comprises:
a sum of the first channel measurement result and a set offset being greater than the second channel measurement result.

34. The method according to any one of claims 31-33, wherein each of the first channel measurement result and the second channel measurement result comprises at least one of following parameters:
SL-RSRP; or
SD-RSRP.

35. The method according to claim 33, further comprising:
determining the set offset according to the parameters comprised in the first measurement result and the second measurement result.

36. The method according to claim 28, wherein the first channel measurement result satisfying the set event and triggering the link switching comprises:
determining a duration for which the first measurement result satisfies the reported event; and
when determining that the duration is within a set time range, triggering the link switching.

37. The method according to claim 28, wherein the first channel measurement result satisfying the set event and triggering the link switching comprises:
determining position information of the first device; and
when the position information is within the set position range and each first measurement result satisfies the set event, triggering the link switching.

38. The method according to claim 28, wherein the first measurement result comprises one or more of:
the first measurement result of the candidate relay device;
an identification of the candidate relay device;
a service cell identification of a relay device in a relay scenario of user equipment to network (U2N);
a second measurement result of a relay device serving the first device or a peer device with an SL unicast connection to the first device;
the first measurement result of the candidate relay device satisfying the set event; or
the identification of the candidate relay device satisfying the device event.

39. The method according to claim 28, further comprising:
determining a current working link of the first device; and
when the candidate relay device satisfying the set event is a target relay device, determining a target link comprising the target relay device, and switching from the current working link to the target link.

40. The method according to claim 39, further comprising:
when the current working link is an SL direct link, determining an SL indirect link to the target relay device, and switching from the SL direct link to the SL indirect link.

41. A communication device, comprising:
a processing module configured to perform a channel measurement on a candidate relay device, obtain a first channel measurement result of the candidate relay device, and trigger link switching when the first channel measurement result satisfies a set event; and/or,
a transceiver module configured to report the first measurement result when the first channel measurement result satisfies the set event.

42. A communication device, comprising:
a transceiver module configured to receive a first measurement result reported by a first device in a case where the first measurement result of a candidate relay device satisfies a set event; and/or,
a processing module configured to trigger link switching between a network device and the first device in a case where the first measurement result satisfies the set event.

43. A communication device, comprising:
a transceiver module configured to receive a first measurement result reported by a first device in a case where the first measurement result of a candidate relay device satisfies a set event; and/or,
a processing module configured to perform link switching between a peer device and the first device in a case where the first measurement result satisfies the set event.

44. A communication device, comprising a processor and a memory, wherein a computer program is stored in the memory, and the processor executes the computer program stored in the memory, to cause the device to perform a method according to any one of claims 1 to 14.

45. A communication device, comprising a processor and a memory, wherein a computer program is stored in the memory, and the processor executes the computer program stored in the memory, to cause the device to perform a method according to claims 15 to 27.

46. A communication device, comprising a processor and a memory, wherein a computer program is stored in the memory, and the processor executes the computer program stored in the memory, to cause the device to perform a method according to claims 28 to 40.

47. A computer-readable storage medium configured to store instructions, wherein when the instructions are executed, a method according to any one of claims 1 to 14 is enabled to be implemented.

48. A computer-readable storage medium configured to store instructions, wherein when the instructions are executed, a method according to claims 15 to 27 is enabled to be implemented.

49. A computer-readable storage medium configured to store instructions, wherein when the instructions are executed, a method according to claims 28 to 40 is enabled to be implemented.
